# EUROPÄISCHE PATENTANMELDUNG

(11) **EP 2 256 464 A2**
(43) Veröffentlichungstag der Anmeldung: **01.12.2010**
(21) Anmeldenummer: 10163059.8
(22) Anmeldetag: 18.05.2010
(51) Int. Cl.: G01F 1/32

(54) **Verfahren und Vorrichtung zum Messen eines Durchflusses eines Fluids in einem Strömungskanal**

(30) Priorität: 25.05.2009 TR 200904043
(71) Anmelder: Robert Bosch GmbH, 70442 Stuttgart (DE)
(72) Erfinder: Ekbul, Ali, 45030, Manisa (TR)

(57) **Zusammenfassung**

Die Erfindung betrifft ein Verfahren und eine Vorrichtung (1) zum Messen eines Durchflusses eines Fluids (F) in einem Strömungskanal, insbesondere eines Volumen- und/oder Massenstromes.

Es ist eine Aufgabe der Erfindung, ein Verfahren und eine Vorrichtung (1) zu schaffen, die weniger komplex sind und zuverlässige Ergebnisse einer Durchflussmessung liefern.

Gekennzeichnet ist das Verfahren dadurch, dass als Signal eine durch die Verwirbelung erzeugte Vibration und/oder Schwingung einer das Fluid (F) zumindest teilweise umgebenden Wandung (3) erfasst wird. Gekennzeichnet ist die Vorrichtung (1) dadurch, dass der Sensor (6) an der Wandung (3) außerhalb des Strömungskanals (2) angeordnet ist, um so indirekt das Signal zu erfassen.

## Beschreibung

Die Erfindung betrifft ein Verfahren zum Messen eines Durchflusses eines Fluids, insbesondere eines Volumen- und/oder Massenstromes, nach dem Oberbegriff des Patentanspruchs 1. Weiter betrifft die Erfindung eine Vorrichtung zum Messen eines Durchflusses eines Fluids, insbesondere eines Volumen- und/oder Massenstromes, nach dem Oberbegriff des Anspruchs 5.

Zur Messung, insbesondere quantitativen Messung, eines Fluids, werden vielfach Wirbel-Durchflussmesser eingesetzt. Diese Durchflussmesser erzeugen in Abhängigkeit von der Durchflussmenge ein Signal, welches gegebenenfalls nach einer Verstärkung ausgewertet und in eine entsprechende Mengenangabe konvertiert wird. In der Regel wird dies mittels Elektronik- und Softwarekomponenten durchgeführt.

Aus der DE 10 2005 003 631 A1 ist eine Vorrichtung und ein Verfahren zur zuverlässigen Wirbel-Durchflussmessung bekannt, umfassend die Schritte Einbringen und Durchströmen eines Fluids durch einen Wirbel-Durchflussmesser, Verwirbeln des Fluids mittels mindestens eines Störkörpers, Erfassen eines Frequenzsignals des verwirbelten Fluids und Auswerten und Ausgeben des erfassten Frequenzsignals. Dabei erfolgt zwischen dem Verwirbeln und dem Auswerten noch das Erfassen eines Amplitudensignals in einem weiteren Schritt, um eine zuverlässige Messung und/oder eine Störungserkennung bereitzustellen. Nachteilig an der Vorrichtung und dem Verfahren gemäß dem Stand der Technik ist die Komplexität zur Erlangung sicherer Ergebnisse einer Durchflussmessung.

Der Erfindung liegt die Aufgabe zugrunde, ein Verfahren und eine Vorrichtung zu schaffen, die weniger komplex sind und zuverlässige Ergebnisse einer Durchflussmessung liefern.

Erfindungsgemäß wird dies durch die Gegenstände mit den Merkmalen des Patentanspruchs 1 und des Patentanspruchs 5 gelöst. Vorteilhafte Weiterbildungen sind den Unteransprüchen zu entnehmen.

Das erfindungsgemäße Verfahren zum Messen eines Durchflusses eines Fluids, insbesondere eines Volumen- und/oder Massenstromes, ist **dadurch gekennzeichnet, dass** als Signal eine durch die Verwirbelung erzeugte Vibration und/oder Schwingung einer das Fluid zumindest teilweise umgebenden Wandung erfasst wird.

In einer Ausführungsform des erfindungsgemäßen Verfahrens ist vorgesehen, dass das erfasste Signal vor dem Auswerten verstärkt wird.

Bei einer weiteren Ausführungsform des erfindungsgemäßen Verfahrens ist vorgesehen, dass das Verwirbeln mittels Durchführen des Fluids durch eine Wirbel erzeugende Durchgangsöffnung bewirkt wird.

In noch einer weiteren Ausführungsform der vorliegenden Erfindung ist vorgesehen, dass eine Vibration und/oder Schwingung der Wandung mittels eines piezoelektrischen Sensors erfasst wird.

Die erfindungsgemäße Vorrichtung zum Messen eines Durchflusses eines Fluids in einem Strömungskanal, insbesondere eines Volumen- und/oder Massenstromes, ist **dadurch gekennzeichnet, dass** der Sensor an der Wandung außerhalb des Strömungskanals angeordnet ist, um so indirekt das Signal zu erfassen. Ein Ausführungsbeispiel der erfindungsgemäßen Vorrichtung sieht vor, dass der Sensor ausgebildet ist, das von dem verwirbelten Fluid auf die Wandung als Vibration und/oder Schwingung der Wandung übertragene Signal zu erfassen.

Noch ein weiteres Ausführungsbeispiel sieht vor, dass die Vorrichtung mindestens ein Verwirbelungsmittel zum Verwirbeln des Fluids umfasst, sodass das Fluid verwirbelt in den Strömungskanal einströmt. Ein weiteres Ausführungsbeispiel der erfindungsgemäßen Vorrichtung sieht vor, dass das Verwirbelungsmittel ein Einlasselement mit mindestens einer Einlassöffnung zum Einlassen des Fluids in den Strömungskanal aufweist, wobei das Einlasselement als an die Innenkontur des Strömungskanals angepasste Schreibe ausgebildet ist, die an die Innenkontur des Strömungskanals entsprechend angrenzt.

Weiter sieht ein anderes Ausführungsbeispiel der vorliegenden Erfindung vor, dass die Einlassöffnung als eine Durchgangsöffnung ausgebildet ist, ausgewählt aus der Gruppe der Querschnitte umfassend eine Kreisform, eine D-Form, eine Dreiecksform, eine Sternform, eine Quadratform, eine Rechteckform, eine Trapezform, eine Hexagonform, eine Kreuzform, eine Ovalform, eine Rautenform, eine Polygonform und dergleichen. Andere Bauformen sind möglich.

Wiederum ein anderes Ausführungsbeispiel der vorliegenden Erfindung sieht vor, dass die Vorrichtung weiter einen Filter aufweist, der das einströmende Fluid filtert.

Mit dem erfindungsgemäßen Verfahren und der erfindungsgemäßen Vorrichtung werden insbesondere die folgenden Vorteile realisiert: Der Sensor zur Erfassung mindestens eines Signals des Durchflusses ist nicht in das durchströmende Medium eingetaucht. Die Erfassung erfolgt kontaktlos in Bezug auf das durchströmende Medium, so dass dadurch ein Verschleiß minimiert wird. Es sind für die Messung keine Bauteile in dem Durchflussbereich erforderlich. In dem Eingangsbereich ist eine einfach ausgebildete Scheibe mit entsprechender Durchgangsöffnung vorgesehen. Die gesamte Vorrichtung ist einfach und leicht herstellbar ausgebildet.

Die Zeichnungen stellen ein Ausführungsbeispiel der Erfindung dar. Es zeigt, jeweils schematisch:
- Fig. 1: die Funktionsweise der Vorrichtung und des Verfahrens,
- Fig. 2: in einer Querschnittsansicht eine erfindungsgemäße Vorrichtung,
- Fig. 3: in Vorderansicht die erfindungsgemäße Vorrichtung nach Fig. 2,
- Fig. 4: ein als Scheibe ausgebildetes Einlasselement,
- Fig. 5: verschiedene Formen als Varianten von Durchgangsöffnungen des Einlassele- ments nach Fig. 4,
- Fig. 6: in mehreren Ansichten ein Einlasselement umfassend eine Scheibe und einen Filter,
- Fig. 7: die Vorrichtung im eingebauten Zustand im Eckbereich eines Leitungssystems in einer Halbschnitt-Darstellung,
- Fig. 8: eine vergrößerte Darstellung des Eckbereiches eines Leitungssystems mit einer Vorrichtung im eingebauten Zustand im Halbschnitt,
- Fig. 9: eine vergrößerte Darstellung eines zylindrischen Einlasselements gemäß Fig. 8 mit Durchgangsöffnungen auf dem Mantel in der Seitenansicht, vertikal durch den horizontalen Teil des Leitungssystem geschnitten, und
- Fig. 10: eine vergrößerte Darstellung eines zylindrischen Einlasselements gemäß den Fig. 8 und 9 mit im Mantel eingebrachten Durchgangsöffnungen in einer perspektivi- schen Ansicht.

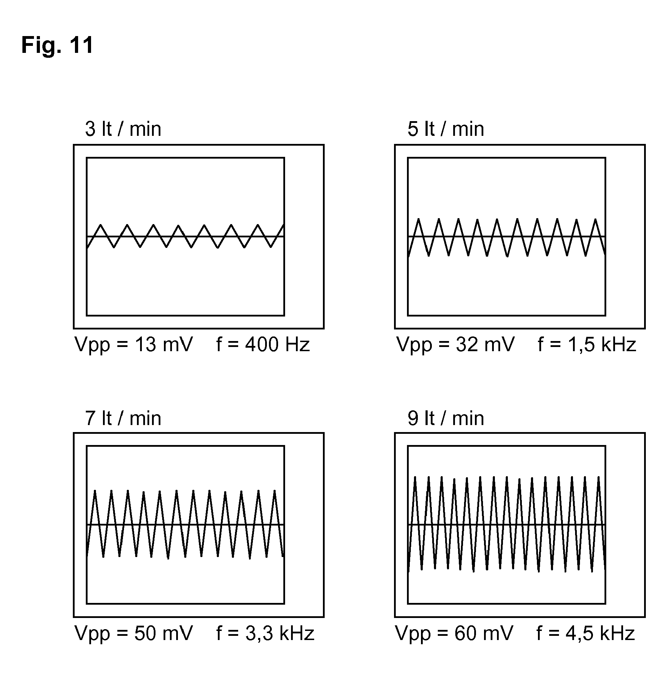

- Fig. 11: mehrere beispielhafte Messergebnisse der Durchflussmessung

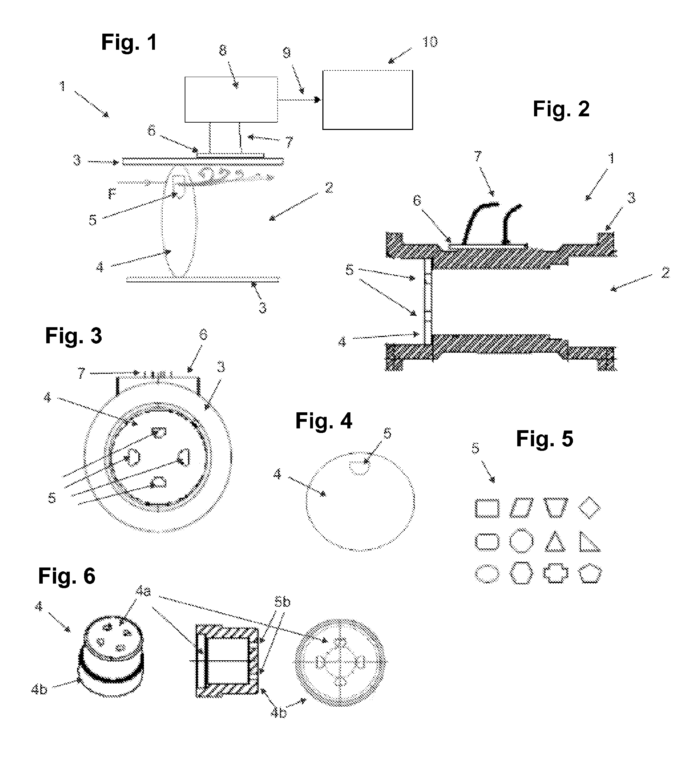

Fig. 1 zeigt schematisch die Funktionsweise einer erfindungsgemäßen Vorrichtung 1 und eines erfindungsgemäßen Verfahrens zum Messen eines Durchflusses eines Fluids, insbesondere eines Volumen- und/oder Massenstromes. Die Vorrichtung 1 umfasst einen Strömungskanal 2, der umfänglich durch eine Wandung 3 begrenzt ist. An einer Einlassseite des Strömungskanals 2 weist die Vorrichtung 1 ein Einlasselement 4 auf, welches in Fig. 1 als Scheibe ausgebildet ist. Das als Scheibe ausgebildete Einlasselement 4 weist in Fig. 1 eine Durchgangsöffnung 5 auf, durch welche ein Fluid F in den Strömungskanal 2 strömt. Die Durchgangsöffnung 5 ist so ausgebildet, dass diese eine Verwirbelung des einströmenden Fluids 5 bei Durchströmen der Durchgangsöffnung 5 erzeugt, sodass das Fluid F verwirbelt in den Strömungskanal 2 gelangt. In der Fig. 1 ist die Durchgangsöffnung D-förmig ausgebildet. An der Wandung 3 ist außerhalb des Strömungskanals 2 ein Sensor 6 zum Erfassen eines durch die Verwirbelung des Fluids F erzeugten Signals angeordnet. Der Sensor 6 ist dabei angrenzend an die Wandung 3 ausgebildet, bevorzugt in einem Bereich nahe des Einlasselements 4. Der Sensor 6 ist als piezoelektrischer Sensor ausgebildet, der Vibrationen und/oder Schwingungen der Wandung 3 erfasst, die durch die Verwirbelung des Fluids F hervorgerufen werden. Der Sensor 6 ist über Leitungen 7 mit einem Verstärker 8 gekoppelt. Der Verstärker 8 ist über Leitungen 9 mit einem Konverter 10 zum Konvertieren der verstärkten Signale in ein Messergebnis gekoppelt.

In Fig. 2 ist die erfindungsgemäße Vorrichtung 1 in einem Querschnitt dargestellt. Dabei umfasst die Vorrichtung 1 den durch die Wandung 3 definierten Strömungskanal 2, der in einem Einlassbereich durch ein Einlasselement 4 mit mehreren Durchgangsöffnungen 5 in axialer Richtung begrenzt ist. An einem Bereich nahe des Einlasselements 4 ist außen an der Wandung 3 außerhalb des Strömungskanals 2 der Sensor 6 angeordnet, von dem zwei Leitungen 7 zu dem hier nicht dargestellten Verstärker 8 oder direkt zu einem Konverter 10 führen.

Fig. 3 zeigt schematisch eine Vorderansicht der erfindungsgemäßen Vorrichtung 1 nach Fig. 2. In der Vorderansicht ist hauptsächlich das als Scheibe mit vier D-förmigen Durchgangsöffnungen 5 ausgebildete Einlasselement 4, die umgebende Wandung 3 und der Sensor 6 mit den als elektrische Anschlüsse ausgebildeten Leitungen 7 dargestellt.

Fig. 4 zeigt schematisch das als Scheibe ausgebildete Einlasselement 4 mit einer D-förmigen Einlassöffnung 5. Die Einlassöffnung 5 kann hinsichtlich der Anzahl, der Form und der Anordnung auf dem Einlasselement 4 unterschiedlich ausgebildet sein.

Fig. 5 zeigt schematisch verschiedene Formen von Durchgangsöffnungen 5 des Einlasselements 4 nach Fig. 4. Die Durchgangsöffnungen 5 sind insbesondere zur Erzeugung einer möglichst optimierten Verwirbelung ausgebildet. Dabei kann das Einlasselement 4 Durchgangsöffnungen 5 gleicher Form oder unterschiedlicher Form in beliebiger Kombination, Anordnung, Größe und dergleichen aufweisen.

Fig. 6 zeigt schematisch in mehreren Ansichten ein Einlasselement 4, umfassend eine Scheibe 4a und einen Filter 4b. Scheibe 4a und Filter 4b sind miteinander verbunden oder einteilig ausbildbar. Die Scheibe 4a weist vier D-förmige Durchgangsöffnungen 5 auf. Der Filter weist ebenfalls Durchgangsöffnungen 5b auf.

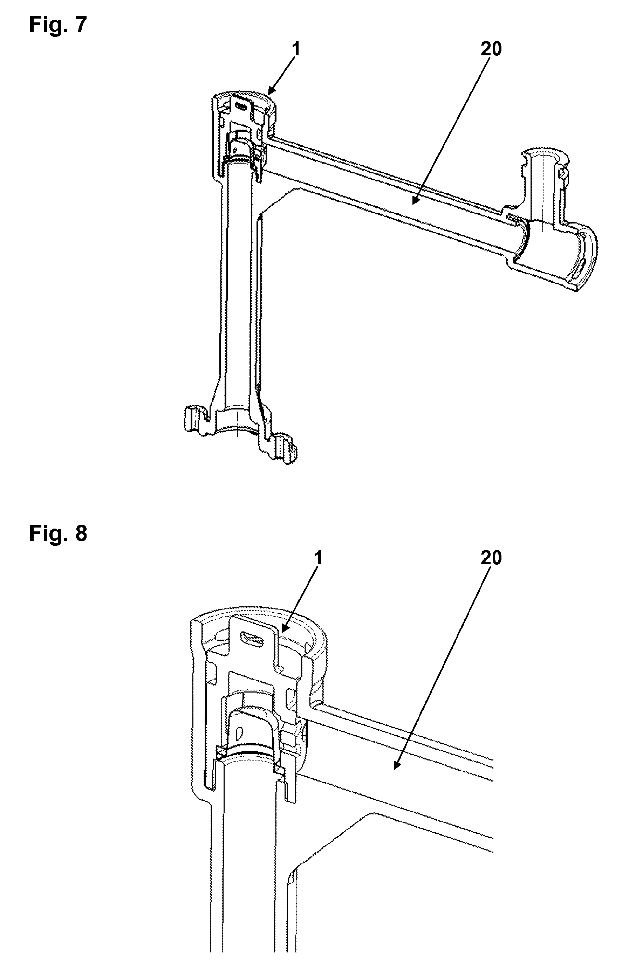

Die Fig. 7 bis 10 zeigen schematisch in mehreren Ansichten eine weitere Ausführungsform der Vorrichtung 1. Das Einlasselement 4 ist in der in den Fig. 7 bis 10 dargestellten Ausführungsform umfänglich an der Vorrichtung 1 angeordnet und integriert mit deren Wandung 3 ausgebildet. Die Vorrichtung 1 ist, wie in den Fig. 7 und 8 ersichtlich, als zugeordnetes Bauteil in ein Leitungssystem 20 mit einem Übereck-Verlauf eingebaut, sodass das Fluid durch die Wandung 3 strömt.

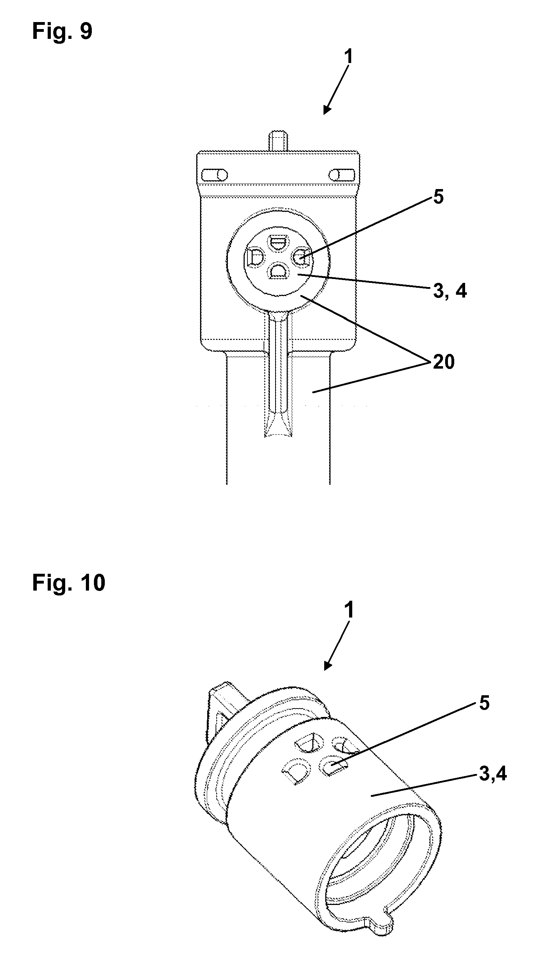

Fig. 8 zeigt eine Darstellung des Eckbereiches eines winkelförmigen Rohrstückes mit einer Vorrichtung 1 im eingebauten Zustand im Halbschnitt. In Fig. 9 ist der Eckbereich weiter vergrößert dargestellt, weil hier ein für Eckeinbau gestaltetes zylindrisches Einlasselement 4 mit Durchgangsöffnungen 5 auf dem Mantel verwendet wird. In Fig. 10 ist das zylindrische Einlasselement 4, bei dem die Durchgangsöffnungen 5 direkt in den Mantel eingebracht sind, gemäß den Fig. 8 und 9 einzeln dargestellt.

Gemäß Fig. 10, bestehend aus vier Messbeispielen, lassen sich Messergebnisse der Durchflussmessung in einem Oszillogramm abbilden. Dabei wird ein Signal mit einem Spannungspegel in mV und einer Frequenz in Hz abgebildet. Dies ist jeweils am unteren Bildrand angegeben. Der gemessene Durchfluss in Liter pro Minute, über der Abbildung angegeben, ergibt sich dann nach Verrechnung, beispielsweise mit einer nicht dargestellten Auswerteelektronik, und steht als Ablesewert zur Verfügung. Es wird deutlich, dass Spannungspegel und Frequenz mit steigendem Durchfluss ansteigen.

## Patentansprüche

1. Verfahren zum Messen eines Durchflusses eines Fluids (F) in einem Strömungskanal, insbesondere eines Volumen- und/oder Massenstromes, umfassend die Schritte des Verwirbelns des Fluids (F), des Erfassens eines durch die Verwirbelung des Fluids (F) erzeugten Signals und des Auswertens des erfassten Signals,
**dadurch gekennzeichnet, dass** als Signal eine durch die Verwirbelung erzeugte Vibration und/oder Schwingung einer das Fluid (F) zumindest teilweise umgebenden Wandung (3) erfasst wird.

2. Verfahren nach Anspruch 1,
**dadurch gekennzeichnet, dass** das erfasste Signal vor dem Auswerten verstärkt wird.

3. Verfahren nach einem der Ansprüche 1 oder 2,
**dadurch gekennzeichnet, dass** das Verwirbeln mittels Durchführen des Fluids (F) durch eine Wirbel erzeugende Durchgangsöffnung (5) bewirkt wird.

4. Verfahren nach einem der Ansprüche 1 bis 3,
**dadurch gekennzeichnet, dass** eine Vibration und/oder Schwingung der Wandung (3) mittels eines piezoelektrischen Sensors (6) erfasst wird.

5. Vorrichtung (1) zum Messen eines Durchflusses eines Fluids (F) in einem Strömungskanal, insbesondere eines Volumen- und/oder Massenstromes, umfassend einen sich entlang einer Durchflussrichtung erstreckenden Strömungskanal (2) mit umfänglicher Wandung (3), durch welchen ein verwirbeltes Fluid (F) strömt, und einen Sensor (6),
**dadurch gekennzeichnet, dass** der Sensor (6) an der Wandung (3) außerhalb des Strömungskanals (2) angeordnet ist, um so indirekt das Signal zu erfassen.

6. Vorrichtung (1) nach Anspruch 5,
**dadurch gekennzeichnet, dass** der Sensor (6) ausgebildet ist, ein von dem verwirbelten Fluid (F) auf die Wandung (3) übertragenes, als Vibration und/oder Schwingung der Wandung (3) ausgebildetes Signal zu erfassen.

7. Vorrichtung (1) nach Anspruch 5 oder 6,
**dadurch gekennzeichnet, dass** die Vorrichtung (1) mindestens ein Verwirbelungsmittel zum Verwirbeln des Fluids (F) umfasst, sodass das Fluid (F) verwirbelt in den Strömungskanal (2) einströmt.

8. Vorrichtung (1) nach einem der Ansprüche 5 bis 7,
**dadurch gekennzeichnet, dass** das Verwirbelungsmittel ein Einlasselement (4) mit mindestens einer Einlassöffnung (5) zum Einlassen des Fluids (F) in den Strömungskanal (2) aufweist, wobei das Einlasselement (4) als an die Innenkontur des Strömungskanals (2) angepasste Scheibe (4a) ausgebildet ist, die an die Innenkontur des Strömungskanals (2) entsprechend angrenzt.

9. Vorrichtung (1) nach einem der Ansprüche 5 bis 8,
**dadurch gekennzeichnet, dass** die Einlassöffnung (5) als eine Durchgangsöffnung (5) ausgebildet ist, ausgewählt aus der Gruppe der Querschnitte umfassend eine Kreisform, eine D-Form, eine Dreiecksform, eine Sternform, eine Quadratform, eine Rechteckform, eine Trapezform, eine Hexagonform, eine Kreuzform, eine Ovalform, eine Rautenform, eine Polygonform und dergleichen.

10. Vorrichtung (1) nach einem der vorherigen Ansprüche 5 bis 9,
**dadurch gekennzeichnet, dass** die Vorrichtung (1) weiter einen Filter (4b) aufweist, der das einströmende Fluid (F) filtert.
